# DEMANDE DE BREVET EUROPEEN

(11) **EP 0 638 492 A1**
(43) Date de publication de la demande: **15.02.1995**
(21) Numéro de dépôt: 93870171.1
(22) Date de dépôt: 13.08.1993
(51) Int. Cl.: B65G 1/127, B65G 47/51, B65G 1/137, B65G 47/78, B65G 17/32

(54) **Installation de stockage et de triage de produits longs tels que barres, tuyaux, fers à béton, etc.**

(71) Demandeur: ALTRO Steel, B-3530 Houthalen (BE); SCHIAPPA CAV RICARDO & CO SNC, I-43040 Felegara Parma (IT)
(72) Inventeur: Peeters, Chris, 3520 Zonhoven (BE); Schiappa, Ricardo, 43040 Felegara (Parma) (IT); Marechal, Ivo, 3530 Houthalen (BE)
(74) Mandataire: Pieraerts, Jacques

(57) **Abrégé**

Cette invention concerne une installation de stockage et de triage de produits longs tels que barres, tuyaux, fers à béton etc., caractérisée en ce qu'elle comprend un ensemble de magasins indépendants (1 - 10) et des moyens pour alimenter sélectivement lesdits magasins et pour permettre de décharger, également sélectivement dans le même temps et selon des séquences indépendantes, les produits longs stockés dans ces magasins.

## Description

L'invention concerne une installation de stockage et de triage de produits longs tels que barres, tuyaux, fers à béton etc..

Le but de l'installation est de réaliser une installation qui offre une flexibilité exceptionnelle tant du point de vue du stockage que de celui du triage. L'installation permet en effet de décharger à tout moment des produits longs de quelque type que ce soit sans interférer dans les opérations de stockage et d'alimentation des magasins et inversément. L'installation s'écarte dans son principe de fonctionnement d'installation de stockage dans laquelle des chaînes de triage, qui receptionnent également les produits longs ne peuvent être animés que dans un sens et n'offrent ni la flexibilité exigée, ni la célérité de triage puisqu'elle sont animées d'un mouvement unidirectionnel.

Pour réaliser les objectifs de l'invention, l'installation de stockage comprend un ensemble de magasins indépendants et des moyens pour alimenter sélectivement lesdits magasins et pour permettre de décharger, également sélectivement dans le même temps et selon des séquences indépendantes, les produits longs stockés dans ces magasins.

Un caractéristique remarquable de l'invention réside dans le fait que chaque magasin est commandé individuellement par des moyens intégrés dans une unité centrale propre à l'installation.

D'autres détails et avantages de l'invention ressortiront de la description qui sera donnée d'une installation de stockage et de triage de produits longs, tels que barres, tuyaux, fers à béton, selon l'invention. Cette description n'est donnée qu'à titre d'exemple et ne limite pas l'invention. Les notations de référence se réfèrent aux figures ci-annexées.

La figure 1 subdivisée en figure 1A et figure 1B montre une vue d'ensemble de l'installation.

La figure 2 montre, à une plus grande échelle, la partie supérieure de deux magasins adjacents et une partie du tapis répartiteur.

La figure 3 montre également, et à une plus grande échelle, la partie inférieure de deux magasins adjacents et une partie du tapis de triage.

L'installation représentée par ces figures se compose d'un nombre de magasins indépendants 1 - 10. Dans la forme d'exécution selon les figures, ces magasins sont disposés verticalement mais toute autre disposition est possible. Le principe sur lequel se base la conception de l'installation est l'indépendance de chacun des magasins ce qui permet l'alimentation d'un ou plusieurs magasins dans le même temps qu'un ou plusieurs magasins déchargent les produits stockés, en direction d'un tapis de triage qui sera décrit en détail plus loin.

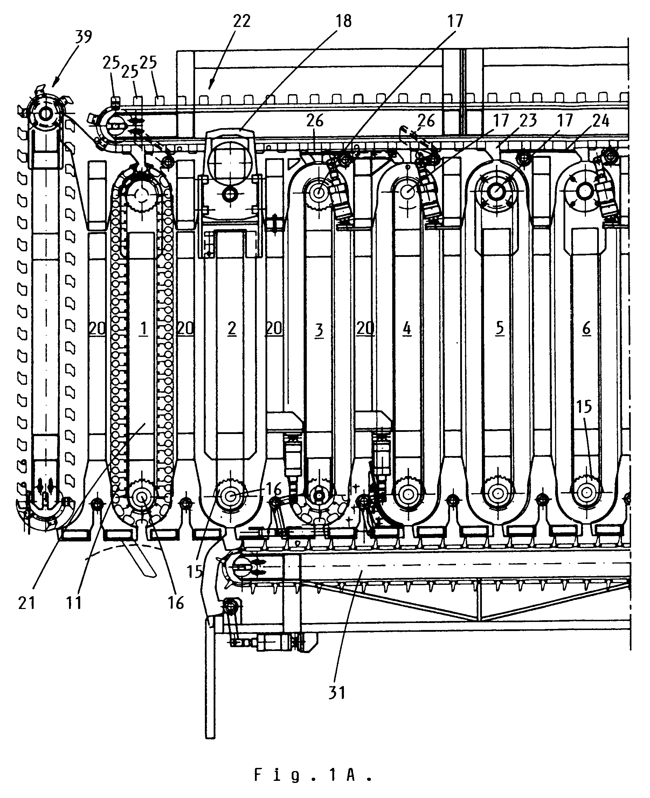

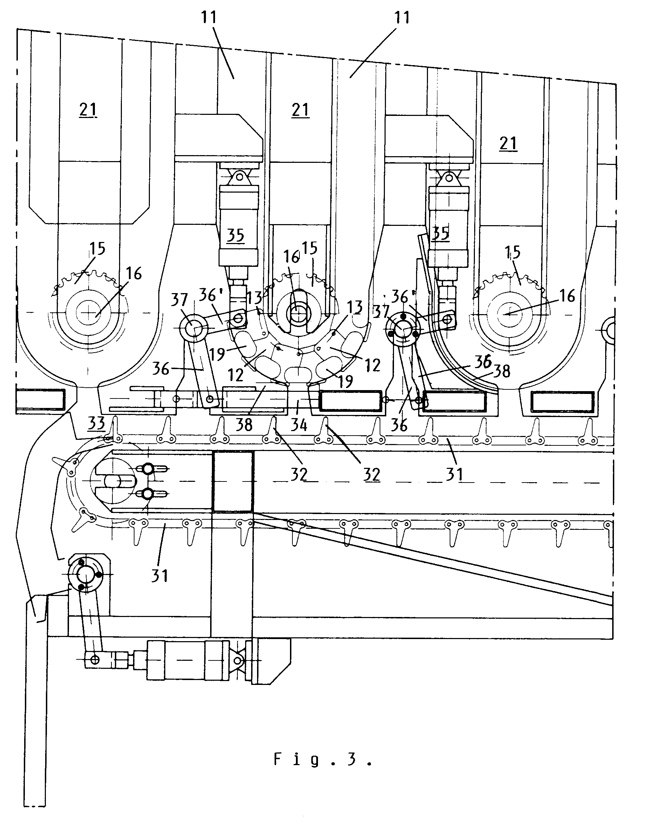

Chacun des magasins 1 - 10 est équipé de chaînes dont la figure 1A (partiellement) et la figure 3 permet une compréhension de leur structure et de leur fonctionnement.

Les chaînes 11 sont constituées par des plaquettes 12 articulées entre elles dans les points de rotation 13. Deux plaquettes adjacentes sont toujours situées dans des plans parallèles. Elles passent, à une extrémité, sur des pignons d'entraînement 14 et sur des pignons de renvoi 15 montés libres sur des arbres 16. Dans la forme d'exécution représentée, les pignons d'entraînement 14 sont les pignons supérieurs calés sur des arbres moteurs 17. A la figure 1A un seul moteur 18 a été représenté et il est important de noter que chaque moteur peut être amené à tourner dans les deux sens. Ceci permet d'actionner les chaînes 11 dans l'un comme dans l'autre sens.

Des magasins 1 - 10 étant conçus pour stocker et trier des produits longs de toute nature et de toute section, les découpes que présentent latéralement les plaquettes 12 peuvent présenter tout profil approprié.

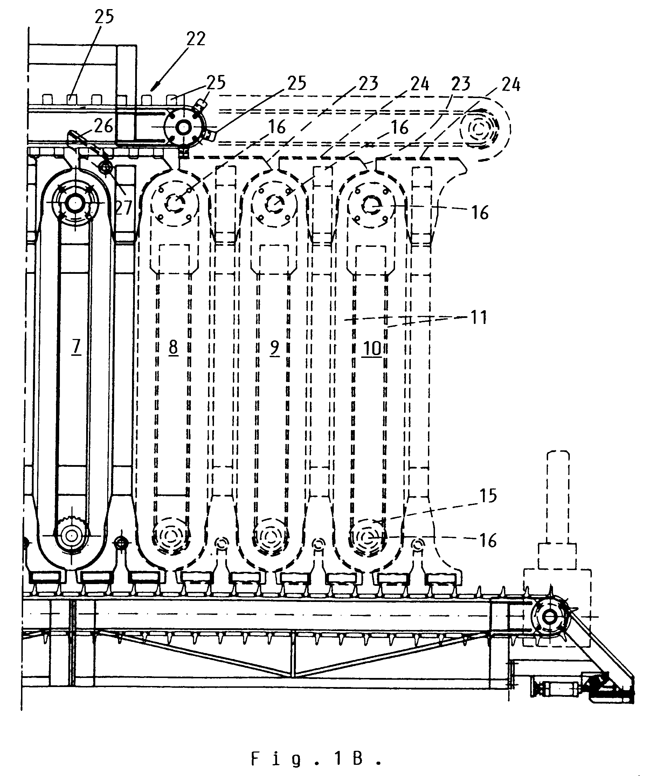

Aux figures 1 - 3 chaque plaquette 12 présente latéralement une découpe 19 de forme hemicirculaire. A la figure 1A on remarque lors du passage des chaînes 11 sur les pignons 14 et 15 les plaquettes 12 sont amenées à s'écarter les unes des autres à la manière de mâchoires tandis que dans les sections rectilignes de chaque chaîne, les mâchoires formées par ces plaquettes sont fermées pour permettre d'emprisonner les produits longs.

Chaque magasin peut être équipé, à la demande, d'un nombre facultatif de chaînes. Chaque magasin peut, par exemple, être équipé de onze chaînes toutes entraînées par un seul moteur, chaque pignon de renvoi est alors monté sur une section d'arbre fou.

Les chaînes circulent à l'intérieur de chaque magasin entre deux parois 20 et de part et d'autre d'un noyau central 21.

L'alimentation qui, dans ce cas ci, se fait à la partie supérieure des magasins 1 - 10, est réalisée à l'intervention d'un tapis répartiteur 22 qui peut couvrir l'ensemble des magasins 1 - 10 ou être déplacé le long des orifices d'entrée de ces magasins.

Les orifices d'entrée sont désignés par la référence 23 et sont ménagés dans un guidage 24 constitué de plusieurs éléments. Le guidage 24 est recouvert d'une matière tel que le nylon et des rainures, non représentées aux dessins, sont ménagées dans le sens longitudinal dans lequel se déplace le tapis répartiteur 22 pour permettre aux doigts pousseurs 25 de ce tapis de circuler dans ces rainures.

Chaque orifice d'entrée 23 peut être obturé par un clapet basculant 26 qui présente, sur sa surface les mêmes rainures que celles que présente le guidage 24 pour permettre le passage des doigts pousseurs 25.

Chaque clapet basculant 26 pivote autour d'un axe 27 actionné de toute manière appropriée, par exemple par un piston hydraulique 28 agissant sur un levier 29 qui est lui-même fixé sur une bague 30 montéeautour de l'axe 27.

Dans leur position fermée les clapets 26 offrent à la face supérieure une surface uniforme le long de laquelle les produits longs sont déplacés par les doigts pousseurs 25.

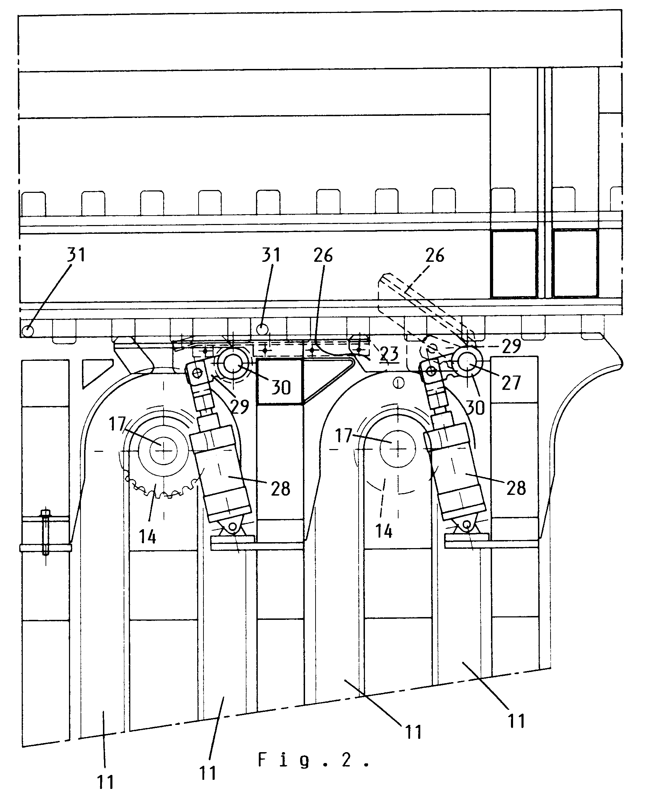

A la figure 2, deux produits longs 31 sont visibles. Ils reposent sur le guidage 24 et l'on remarque qu'un des clapets basculants est en position fermée tandis que l'autre est ouvert de telle sorte que l'orifice d'entrée 23 est ouvert et permet le passage d'un produit long vers le magasin correspondant.

A la partie inférieure les produits longs sont maintenus à l'intérieur des mâchoires formées par deux découpes 19 appartenant à deux plaquettes adjacentes 12. Un produit long peut, à la partie inférieure d'un magasin, être libéré en direction du tapis de triage 31.

Ce tapis présente également des organes d'entraînement 32 et l'espace entre deux organes d'entraînement 32 est légèrement supérieur à la largeur de l'orifice d'évacuation 33 disposé à la base d'un magasin de type vertical. Cet orifice peut être obturé par des barres 34 qui peuvent être animées d'un mouvement de translation provoquant l'ouverture et la fermeture de l'orifice d'évacuation 33. Ces barres 34 sont commandées à partir d'un cylindre hydraulique 35 agissant sur cette barre par l'intermédiaire d'un levier coudé 36-36' monté à pivotement sur un petit axe 37. L'orifice d'évacuation 33 est maintenu fermé par une plaque en matière du type nylon, 38, qui s'oppose à l'évacuation d'un produit long lorsque, les mâchoires formées par les découpes 19 des plaquettes 11 se trouvent en position d'ouverture mais ne doivent pas libérer un produit long emprisonné.

De plus, à la base d'un magasin de type vertical, la partie inférieure de celui-ci qui, en gros, se situe à hauteur d'un pignon 15 et en-dessous de celui-ci est équipée de part et d'autre de l'orifice d'évacuation 33 d'une plaque courbe 38 en une matière telle que le nylon en raison de ses propriétés de haute résistance et d'absorption du bruit.

De la description qui vient d'être donnée, il apparaît clairement que l'installation selon l'invention présente une très grande souplesse en ce sens qu'elle peut s'adapter à toute demande de stockage de produits longs indépendamment d'une demande de triage de ces mêmes produits et cela dans le même temps et sans que les opérations de stockage aient quelque influence sur les opérations de triage et inversément.

Attendu que les moteurs 18 peuvent être mis en rotation, dans l'un ou l'autre sens, il est possible d'utiliser de la manière la plus économique les magasins de stockage et de triage. Cette conception entraîne de très grandes économies de temps et d'énergie puisqu'elle est conçue pour réduire au minimum les déplacements, dans l'un ou l'autre sens, des chaînes de stockage.

L'objet de l'invention, c'est-à-dire une très grande flexibilité de l'installation, est donc assuré grâce aux moyens mis en oeuvre pour réaliser les opérations de stockage et de triage.

L'invention n'est pas limitée à la forme décrite ci-dessus et bien des modifications pourraient y être apportées à condition de tomber dans le cadre des revendications annexées.

C'est ainsi que les moyens conçus pour alimenter le tapis répartiteur 22 peuvent s'écarter sensiblement de ceux qui sont désignés par la référence générale 39.

## Revendications

1. Installation de stockage et de triage de produits longs tels que barres, tuyaux, fers à béton etc., caractérisée en ce qu'elle comprend un ensemble de magasins indépendants (1-10) et des moyens pour alimenter sélectivement lesdits magasins et pour permettre de décharger, également sélectivement dans le même temps et selon des séquences indépendantes, les produits longs stockés dans ces magasins.

2. Installation selon la revendication 1, caractérisée en ce que chaque magasin est commandé individuellement par des moyens intégrés dans une unité centrale propre à l'installation.

3. Installation selon la revendication 1, caractérisée en ce que chacun des magasins précités (1-10) est équipé d'un ensemble de chaînes de stockage (11) formées d'éléments articulés entre-eux et entraînées par des pignons (14) dont l'un est calé sur un arbre moteur (18) tandis que l'autre est un pignon (15) calé sur un arbre libre (16).

4. Installation selon la revendication 2, caractérisée en ce que les éléments articulés précités sont constitués par des plaquettes (12) reliées à pivotement entre-elles, par leurs côtés adjacents, et qui présentent une découpe (19) latérale dimensionnée pour constituer avec la découpe latérale (19) d'une plaquette adjacente une mâchoire capable de retenir un produit long tel que défini ci-dessus, la chaîne formée par ces plaquettes étant guidée sur des pignons, de manière telle que les plaquettes (12) précitées sont amenées à s'ouvrir lors du passage desdites plaquettes sur lesdits pignons.

5. Installation selon l'une des revendications 1 - 4, caractérisée en ce que les moyens précités pour alimenter sélectivement les magasins précités (1 - 10) sont constitués par un tapis répartiteur (22) qui déplace les produits longs sur un guidage (24) qui s'étend devant des orifices d'entrée (23) desdits magasins et par des clapets basculants (26) disposés sur la trajectoire des produits longs et incorporés dans le guidage précité (24).

6. Installation selon l'une des revendications 1 - 5, caractérisée en ce que les moyens permettant de décharger sélectivement les produits longs sont constitués par des barres (34) formant tiroirs libérant des orifices de sortie (33) des magasins précités et par un tapis de triage (31) réceptionnant les produits longs déchargés.

7. Installation selon l'une des revendications 4 - 6, caractérisée en ce que plusieurs chaînes de stockage sont calées sur un même arbre moteur.

8. Installation selon l'une des revendications 3 - 6, caractérisée en ce que chacun des magasins précités (1-10) comporte un noyau central de guidage (21) pour chacune des chaînes de stockage précitées et deux parois (20) déterminant sensiblement la largeur utile de chacun des magasins verticaux précités.

9. Installation selon l'une quelconque des revendications 3 - 8, caractérisée en ce que les moyens précités destinés à alimenter sélectivement, chacun des magasins précités, sont constitués par des clapets basculants (26) disposés avec leur axe de basculement (27) parallèlement au plan dans lequel s'étendent les magasins précités et donc se présentent les produits longs, chaque clapet basculant (26) ouvrant un passage (23) face à un magasin correspondant et cela dans le plan dans lesquel les produits longs sont déplacés sur le guidage précité, lequel s'étend face au brin de retour du tapis répartiteur précité (22).

10. Installation selon la revendication 9, caractérisée en ce que les clapets basculants précités (26) sont montés à basculement autour d'un axe (27) qui se situe en aval du passage précité (23), lorsqu'on considère le sens dans lequel se déplacent les produits longs précités.

11. Installation selon l'une des revendications 9 et 10, caractérisée en ce que les passages précitées (23) sont constitués par une interruption, dans le sens longitudinal d'un magasin, des éléments constituant le guidage précité (24).

12. Installation selon l'une des revendications 9 - 11, caractérisée en ce que les clapets basculants précités (26) sont commandés par des moyens qui actionnent simultanément tous les clapets basculants disposés face à un même magasin.

13. Installation selon l'une des revendications 1 - 12, caractérisée en ce que lorsque les magasins précités sont verticaux ou sensiblement verticaux, les produits longs parviennent par gravité dans chacun des magasins précités et tombent également par gravité sur le tapis de triage précité (31).

14. Installation selon l'une des revendications 1 - 12, caractérisée en ce que, lorsque les magasins précités s'étendent dans un plan incliné, sensiblement horizontal ou horizontal, des moyens mécaniques sont prévus pour introduire les produits longs dans chacun des magasins précités et pour les en extraire.

15. Installation selon l'une des revendications 3 - 14, caractérisée en ce que les orifices d'entrée (23) et de sortie (33) sont situés à hauteur d'un pignon, plus particulièrement face à l'endroit où une machoîre formée par deux plaquettes adjacentes (12) d'une chaîne (11) est amenée à s'ouvrir lors de son passage sur un pignon (15).

16. Installation selon l'une des revendications 5 à 15, caractérisée en ce que le tapis répartiteur précité (22) a une longueur qui correspond sensiblement à l'étendue qui sépare l'orifice d'entrée du premier magasin (1) de l'orifice d'entrée du dernier magasin (10) lorsque ceux-ci sont disposés en alignement.

17. Installation selon l'une des revendications 5 à 15, caractérisée en ce que le tapis répartiteur précité (22) a une longueur inférieure à la distance qui sépare l'orifice d'entrée du premier magasin (1) de celle du dernier, (10), des moyens étant prévus pour déplacer ledit tapis répartiteur (22) sur la distance précitée.

18. Installation caractérisée en ce qu'une paroi courbe (38) est disposée face à la partie de chacune des chaînes précitées à l'endroit où les plaquettes (12) formant machoîres sont en position ouverte, afin de servir de guidage aux produits qui se trouvent momentanément libérés par les plaquettes précitées.

19. Installation selon la revendication 18, caractérisée en ce que la plaque de guidage précitée (38) est constituée de nylon ou d'une matière techniquement équivalente du point de vue résistance à l'usure et absorption du bruit.

20. Installation selon l'une des revendications 1 à 12, caractérisée en ce que, lorsque les magasins (1 - 10) sont verticaux ou sensiblement verticaux, les moyens pour décharger sélectivement les produits stockés dans les magasins précités sont constitués par des barres (34) formant tiroirs libérant des passages sous les chaînes de stockage précitées.

21. Installation selon l'une des revendications 6 - 20, caractérisée en ce que le tapis de triage précité (31) est équipé d'organes d'entraînement (32) espacés entre-eux sur une distance légèrement supérieure à l'orifice d'évacuation (33) créé par l'ouverture des plaquettes précitées (12) lors du passage d'une chaîne de stockage sur un pignon.
